# EUROPEAN PATENT SPECIFICATION

(11) **EP 4 232 415 B1**
(45) Date of publication and mention of the grant of the patent: **14.08.2024**
(21) Application number: 21798458.2
(22) Date of filing: 25.10.2021
(51) Int. Cl.: C03B 9/34, C03B 9/347

(54) **MOULD FOR PRODUCTION OF GLASS BOTTLES**
FORM ZUR HERSTELLUNG VON GLASFLASCHEN
MOULE POUR LA PRODUCTION DE BOUTEILLES EN VERRE

(30) Priority: 26.10.2020 IT 202000025327
(43) Date of publication of application: 30.08.2023
(73) Proprietor: Bormioli Luigi S.p.A., 43122 Parma (IT)
(72) Inventor: BARBATO, Carmine, 43123 Parma (IT)
(74) Representative: Locatelli, Massimo
(86) International application number: PCT/IB2021/059818
(87) International publication number: WO 2022/090891

(56) References cited:
- WO-A1-2019/003828

## Description

The present invention relates to a mould for production of glass bottles and vials, typically intended for the perfumery and cosmetics sector.

As is well known, glass bottles and vials for use in the perfumery and cosmetics sector consist of a hollow body, adapted to contain the product (generally in liquid, cream or gel form), which narrows at the top into a neck terminating in a mouth which may be provided with an external screw thread (so-called "screw mouth") to be closed by means of a screw cap, or an annular rib (so-called "clamp mouth") to allow clipping the pump mechanism for spraying the perfume or cosmetics.

In glass bottle production processes using so-called "blow-blow" and "press-blow" technologies, the mouth is made in the preparatory mould by means of the neck ring (arranged in the lower part of the preparatory mould, since, for operating reasons, the preparatory mould must be assembled in an upside-down position, i.e., with the mouth of the bottle at the bottom), which provides the mouth with its external shape, including any screw thread in the case of a screw mouth or annular rib in the case of a clamp mouth, and the so-called "plunger", i.e., a punch which penetrates the mould coaxially inside the neck ring, determining the shape and the internal size of the mouth itself.

The neck ring is normally housed (together with the so-called "finish thimble", i.e., an element for centring and guiding the "plunger" in its movement towards the inside of the mould, and the "plunger" itself) in a specially shaped seat at the lower end of the preparatory mould (formed by two complementary half-seats each present in one of the two halves into which the mould is usually divided). In addition to the above-mentioned function of producing the external part of the bottle mouth with the desired dimensional and shape features, the neck ring also serves to support the parison (i.e., the hollow body outlined from the initial drop of molten glass) when, at the end of the first operating step, the preparatory mould is opened and the parison itself is rotated 180° to be transferred to the finishing mould.

An example of such prior art moulds is disclosed by WO2019/003828A1.

On the market, there is often a demand for bottles which, while being of the same shape, weight and capacity, have different types of mouths ("screw mouth" vs "clamp mouth"), or different shapes (height and/or diameter) .

In the prior art, a modification of the mouth of a bottle can generally be implemented, with reasonable costs, by remaking the assembly consisting of the neck ring, finish thimble and plunger, but only if the differences between the two mouths are minimal and the external shape and dimensions of the new neck ring can therefore be kept unchanged, so that it can also be inserted into the aforesaid seat at the lower end of the preparatory mould.

If the changes required for the mouth of a bottle are more significant, either in terms of the shape and diameter of the mouth or the length of the neck, it has so far been necessary to completely redo the mould to make it conform to the new bottle neck and to receive a new neck ring, specially designed for the new mouth. It is clear that, in this case, the costs involved in making the new bottle would inevitably become very high.

The general object of the present invention is to overcome the above-mentioned drawbacks by providing a solution which allows even significant changes to be made to the neck and mouth of glass bottles with respect to standardized shapes and sizes, without the need for costly remakes of the entire mould and thus ensuring great production flexibility which allows even small batches of bottles with customized mouths to be produced economically, using the same moulds designed for bottles with standard mouths.

In view of such an object, it was conceived to produce, according to the invention, a mould for production of glass bottles, comprising a body provided with an internal cavity first portion shaped according to the shape of the body of the glass bottle to be made, characterized in that in the lower part of the mould there is a first seat open both at the top, in communication with said internal cavity portion, and at the bottom, the mould further comprising an adapter, also open at the top and at the bottom, which can be inserted in the aforementioned seat and provided at the bottom with a further shaped seat intended for receiving a neck ring with relative finish thimble and plunger.

To clarify the explanation of the innovative principles of the present invention and the advantages thereof with respect to the prior art, one possible illustrative embodiment applying such principles will be described below, with the aid of the attached drawings. In the drawings:
Fig. 1 depicts a partially sectioned raised view of a preparatory mould of the prior art, with the assembly formed by the neck ring, finish thimble and plunger inserted into its seat in the bottom of the mould.
Fig. 2 depicts a view of the prior art mould of Fig. 1, without the neck ring, finish thimble and plunger assembly.
Fig. 3 depicts, in exploded view, a preparatory mould according to the invention, with the adapter not yet inserted in its seat.
Fig. 4 depicts a view of the mould of Fig. 3 with the adapter inserted in its seat.
Fig. 5 depicts a view of the mould of Fig. 4 with the assembly formed by the neck ring, finish thimble and plunger inserted in the adapter.

The figures show half of the mould, essentially depicting the mould sectioned along a central plane: this is both to describe the application of the inventive concept in the most general terms possible, and for graphic reasons intended to make the arrangement of the 'solid' parts visually more immediate with respect to the cavities present in the mould itself.

Moreover, these moulds are usually made of two halves (i.e., two half-moulds) joined together by suitable known coupling means and then opened at the end of the working step which occurs in the preparatory mould in order to extract the parison, supported by the neck ring, and transfer it to the finishing mould. Therefore, in the description of the various components, reference can be made either to the mould (generally understood as a whole) or to the half-mould actually illustrated in the drawings.

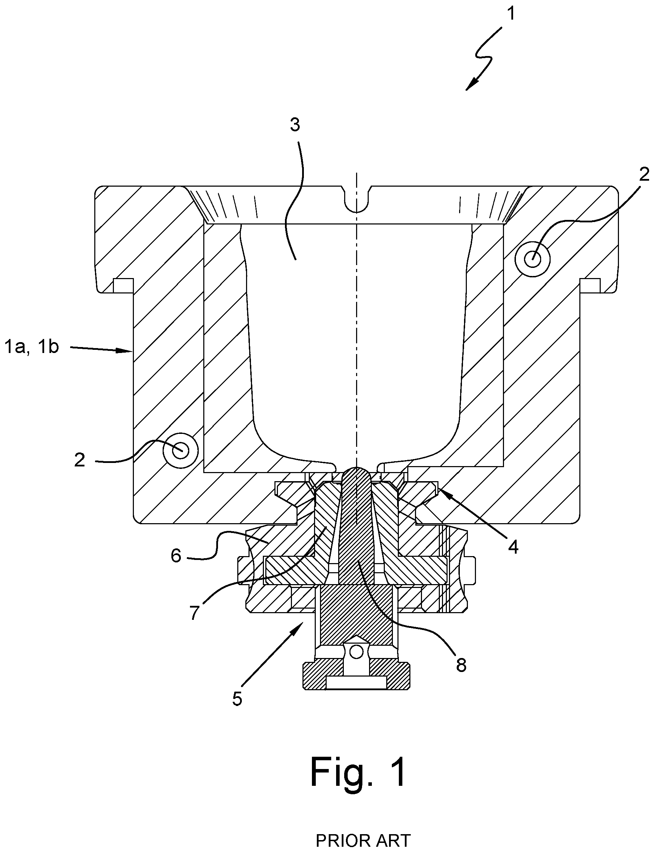

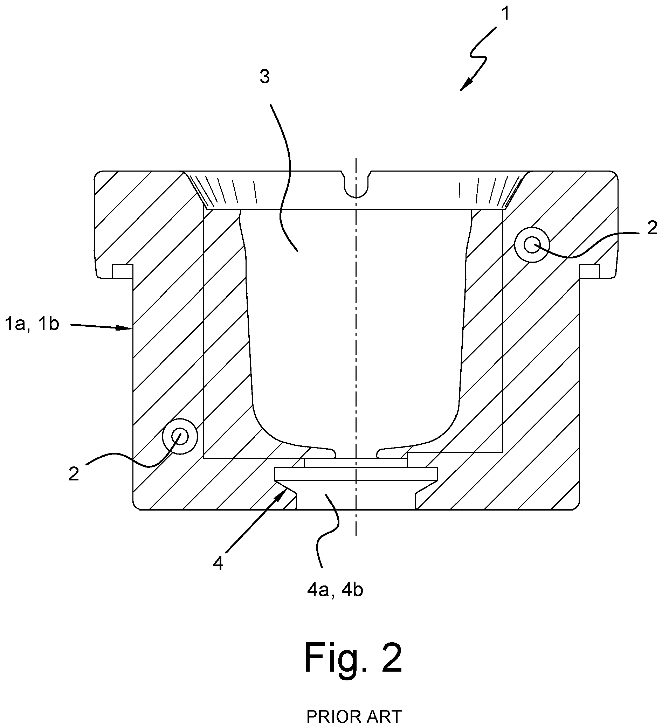

Fig. 1 and Fig. 2 refer to a preparatory mould 1 made according to the prior art, where for simplicity only one half-mould 1a of the two half-moulds which normally compose the whole mould is shown. Known connection means 2 are included to ensure the assembly of the half-mould 1a to a half-mould 1b which is complementary thereto. The half-mould 1b is not specifically shown here, as it is substantially similar to the half-mould 1a.

The mould comprises a solid body within which a cavity 3 is obtained, substantially having the shape of the container (in this case a bottle or vial) to be made. Depending on the production technology used (blowing, pressing), a drop of molten glass is introduced, according to known methods and therefore not further described here, into the cavity 3 to obtain a hollow body (parison) with a general shape similar to that of the container to be made.

In the lower part of the mould 1 there is a shaped seat 4 (more clearly visible in Fig. 2), open below and intended to receive the operating assembly 5 consisting of the neck ring 6, the finish thimble 7 and the plunger 8 (shown in Fig. 1).

As is well known to those skilled in the art, the neck ring 6 has both the function of cooperating with the mould by acting as a matrix for making the external surface of the bottle mouth (and therefore, depending on the type of mouth to be obtained, its central opening may have, for example, a square or circular shape, with a threaded surface to make a screw-mouth, a grooved surface to make a clamp-mouth, etc.), and the function of supporting the parison when, at the end of the first forming step, the preparatory mould is opened and the parison itself is rotated 180° to be transferred to the finishing mould.

Since the preparatory mould must work in an upside-down position, i.e., with the internal cavity 3 oriented so that the portion corresponding to the neck and mouth of the bottle is at the bottom, the seat 4 for the neck ring is arranged in the bottom of the mould. In particular, in the half-mould 1a shown in the figure there is a half-seat 4a intended, together with a corresponding half-seat 4b present in the complementary half-mould 1b (as mentioned, not shown in the attached figures), to form the entire seat 4 for receiving the neck ring 6. The plunger 8 is axially movable within the finish thimble 7 in order to penetrate the mould coaxially with the neck ring and to create the internal opening of the bottle mouth.

As can clearly be seen from Figures 1 and 2, in the moulds of the prior art, the housing seat 4 of the neck ring was shaped and sized to receive a complementary neck ring of a predetermined shape and size.

If a bottle with the same body but with a different mouth shape, diameter or length was required, which could only be obtained with another neck ring of suitable shape and size, it would generally be necessary to modify the entire mould to obtain a new and larger seat 4, capable of receiving the specific neck ring designed for the new mouth, or to make a new mould, so as to have two different moulds for the same bottle, each specialized for a different mouth to be supplied to such a bottle.

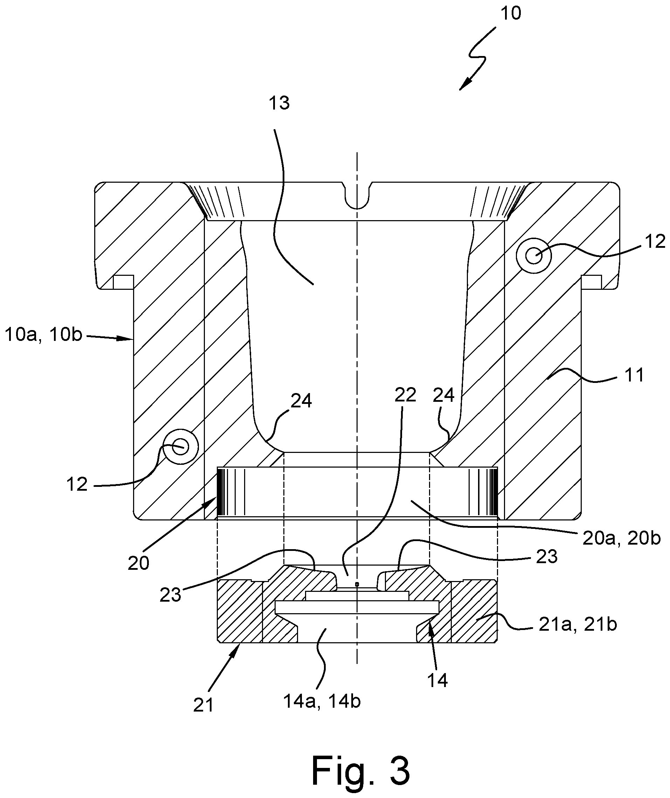

Instead, a preparatory mould 10 according to the invention is illustrated in Figures 3-5. Again, for simplicity, only one half-mould 10a of the two half-moulds which normally compose the whole mould is shown. Known connection means 12 are included to ensure the assembly of the half-mould 10a to a half-mould 10b which is complementary thereto. The half-mould 10b is not specifically shown here, being substantially similar to the half-mould 10a, as are the other components respectively present or associated with the two complementary half-moulds.

The mould 10 comprises a solid body 11 within which a cavity 13 is obtained, substantially having the shape of the container (in this case a bottle or vial) to be made. Depending on the production technology used (blowing, pressing), a drop of molten glass is introduced, according to methods well known to those skilled in the art and therefore not further described here, into the cavity 13 to obtain a hollow body (parison) with a general shape similar to that of the container to be made.

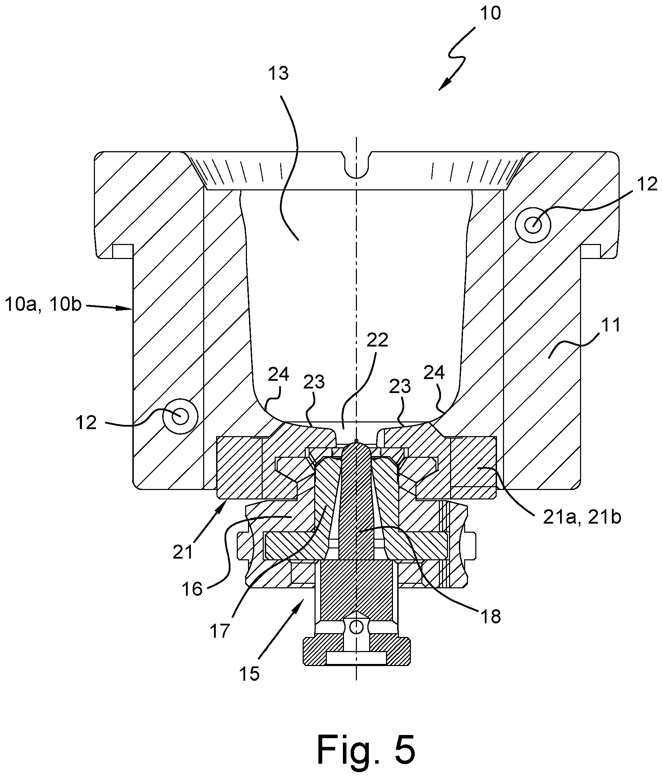

According to the invention, in the bottom of the mould 10 a first seat 20 for housing an adapter 21 is obtained, which in turn is provided with a second shaped seat 14, open at the bottom and intended to receive an operating assembly 15 consisting of the neck ring 16, the finish thimble 17 and the plunger 18 (shown in Fig. 5) .

More precisely, in the half-mould 10a visible in the figure there is a half-seat 20a for housing a first half 21a of the adapter 21, which in turn includes a half-seat 14a intended, with a corresponding half-seat 14b present in a second half 21b of the adapter 21, complementary to said first half 21a and inserted in a half-seat 20b in the complementary half-mould 10b, to form the entire second seat 14 for housing the neck ring 16.

The seat 20 of the adapter is thus open at the top to put the seat 14 of the neck ring in communication with the internal cavity 13 of the mould and is also open at the bottom to allow the introduction of the plunger 18 to make the internal opening of the bottle mouth. For the same reasons, the adapter 21 is also naturally open at the top and bottom.

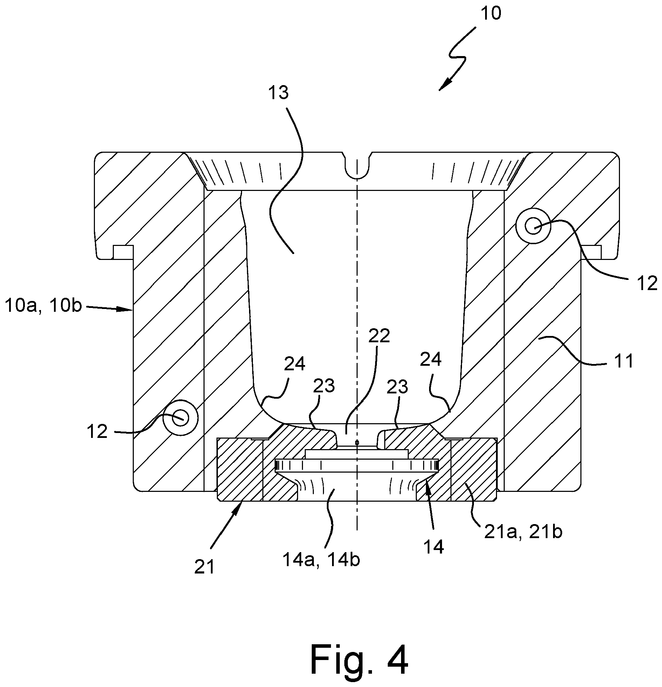

In Fig. 4 the adapter 21 is housed in its seat 20 in the bottom of the mould 10, while in Fig. 5 the operating assembly 15 formed by the neck ring 16, the finish thimble 17 and the plunger 18 is inserted in the aforesaid seat 14.

The plunger 18 is axially movable within the finish thimble 17 in order to penetrate the mould coaxially with the neck ring and to create the internal opening of the bottle mouth.

As can clearly be seen in Fig. 3, in the mould according to the invention, the adapter 21, in addition to the seat 14 for the neck ring, also includes above a part of the internal cavity of the mould in which the parison is formed, in particular a part 22, complementary to the cavity 13 of the body 11 of the mould, intended for forming the neck of the bottle and a portion of the connection of the neck with the shoulders of the bottle itself. Said internal cavity part 22 therefore has a surface 23 shaped so as to make, when the adapter 21 is housed in the seat 20 (as visible in Figures 4 and 5), continuity with the sections of the surface 24 of the part of cavity 13 of the body 11 intended to form the shoulders of the bottle.

If, for reasons related to the market, it should be required to produce a bottle of the same shape, size and capacity (corresponding to the internal cavity of the mould 10), but characterized by a different neck and mouth configuration (in terms of length and/or diameter, geometric shape or type of mouth, for example, screw or clamp), in the mould according to the invention, it will be sufficient to replace the adapter 21 with another adapter whose internal cavity 14 has the appropriate shape and size to house a neck ring (with relative finish thimble and plunger) suitable for making the new mouth.

It is at this point clear how the mould according to the invention has enabled the preset objects to be achieved.

For example, the adapter 21 could also affect a larger portion in height within the mould 10, so as to make the shoulders and possibly part of the body of the bottle more significantly modifiable.

## Claims

1. Mould for production of glass bottles, comprising a body (11) provided with an internal cavity first portion (13) shaped according to the shape of the body of the glass bottle to be made, **characterized in that** in the lower part of the mould there is a first seat (20) open both at the top, in communication with said internal cavity portion (13), and at the bottom, the mould further comprising an adapter (21), also open at the top and at the bottom, which can be inserted in the aforementioned seat (20) and provided at the bottom with a further shaped seat (14) intended for receiving a neck ring (16) with relative finish thimble (17) and plunger (18).

2. Mould for production of glass bottles according to claim 1, **characterized in that** the adapter (21) also includes at the top a further portion (22) of the internal cavity of the mould, complementary to said first portion (13) of the internal cavity of the mould body (11), intended for the moulding of the neck of the bottle and of a portion connecting the neck with the shoulders of the bottle itself.

3. Mould for production of glass bottles according to claim 2, **characterized in that** said further portion (22) of the internal cavity of the mould has a surface (23) shaped so as to realize, when the adapter (21) is housed in the aforementioned seat (20), continuity with surface portions (24) of the internal cavity first portion (13) of the mould body (11) which are intended to form the shoulders of the bottle.

4. Mould for production of glass bottles according to claim 1, **characterized in that** the mould (10) is composed of two complementary half-moulds, which can be coupled together, each half-mould having a half-seat complementary to the half-seat of the other half-mould to form said first seat (20) for housing the adapter (21) and the adapter (21) being in turn composed of two complementary halves, which can be inserted into the respective half-seats of said first seat (20), each half of the adapter (21) being in turn provided with a half-seat intended to form said second seat (14) for housing the neck ring (16).

## Patentansprüche

1. Form zur Herstellung von Glasflaschen, umfassend einen Körper (11), der mit einem ersten inneren Hohlraumabschnitt (13) versehen ist, der gemäß der Form des Körpers der herzustellenden Glasflasche geformt ist, **dadurch gekennzeichnet, dass** ein erster Sitz (20) in dem unteren Teil der Form vorhanden ist, der sowohl an der Oberseite in Verbindung mit dem inneren Hohlraumabschnitt (13) als auch ganz unten offen ist, wobei die Form ferner einen ebenfalls an der Oberseite und ganz unten offenen Adapter (21) umfasst, der in den vorgenannten Sitz (20) eingeführt werden kann und der ganz unten mit einem weiteren geformten Sitz (14) versehen ist, der zur Aufnahme eines Halsrings (16) mit einer entsprechenden Fertigbearbeitungsdorn (17) und einem Kolben (18) bestimmt ist.

2. Form zur Herstellung von Glasflaschen nach Anspruch 1, **dadurch gekennzeichnet, dass** der Adapter (21) ferner an der Oberseite einen weiteren Abschnitt (22) des Innenhohlraums der Form umfasst, der komplementär zu dem ersten Abschnitt (13) des Innenhohlraums des Formkörpers (11) ist und zum Formen des Halses der Flasche und eines Abschnitts bestimmt ist, der den Hals mit den Schultern der Flasche selbst verbindet.

3. Form zur Herstellung von Glasflaschen nach Anspruch 2, **dadurch gekennzeichnet, dass** der weitere Abschnitt (22) des Innenhohlraums der Form eine Oberfläche (23) aufweist, die so geformt ist, dass sie, wenn der Adapter (21) in dem vorgenannten Sitz (20) aufgenommen wird, eine Kontinuität mit Oberflächenabschnitten (24) des ersten Abschnittes (13) des Innenhohlraums des Formkörpers (11) realisiert, die dazu bestimmt sind, die Schultern der Flasche zu bilden.

4. Form zur Herstellung von Glasflaschen nach Anspruch 1, **dadurch gekennzeichnet, dass** die Form (10) aus zwei komplementären Halbformen besteht, die miteinander gekoppelt werden können, wobei jede Halbform einen Halbsitz aufweist, der komplementär zu dem Halbsitz der anderen Halbform ist, um den ersten Sitz (20) zur Aufnahme des Adapters (21) zu bilden, und der Adapter (21) wiederum aus zwei komplementären Hälften besteht, die in die jeweiligen Halbsitze des ersten Sitzes (20) eingeführt werden können, wobei jede Hälfte des Adapters (21) ihrerseits mit einem Halbsitz versehen ist, der dazu bestimmt ist, den zweiten Sitz (14) zur Aufnahme des Halsrings (16) zu bilden.

## Revendications

1. Moule pour la production de bouteilles en verre, comprenant un corps (11) muni d'une première partie (13) de cavité interne mise en forme selon la forme du corps de la bouteille en verre devant être fabriquée, **caractérisé en ce que** dans la partie inférieure du moule se trouve un premier siège (20) ouvert à la fois en haut, en communication avec ladite partie (13) de cavité interne, et au fond, le moule comprenant en outre un raccord (21), également ouvert en haut et au fond, qui peut être inséré dans le siège (20) susmentionné et muni, au fond, d'un siège (14) mis en forme supplémentaire destiné à recevoir une bague de goulot (16) dotée d'une busette de finition (17) et d'un plongeur (18) associés.

2. Moule pour la production de bouteilles en verre selon la revendication 1, **caractérisé en ce que** le raccord (21) inclut également, en haut, une partie (22) supplémentaire de la cavité interne du moule, complémentaire de ladite première partie (13) de la cavité interne du corps du moule (11), destinée au moulage du goulot de la bouteille et d'une partie reliant le goulot aux épaulements de la bouteille elle-même.

3. Moule pour la production de bouteilles en verre selon la revendication 2, **caractérisé en ce que** ladite partie (22) supplémentaire de la cavité interne du moule possède une surface (23) mise en forme de façon à réaliser, lorsque le raccord (21) est logé dans le siège (20) susmentionné, une continuité avec des parties de surface (24) de la première partie (13) de cavité interne du corps du moule (11) qui sont destinées à former les épaulements de la bouteille.

4. Moule pour la production de bouteilles en verre selon la revendication 1, **caractérisé en ce que** le moule (10) est composé de deux demi-moules complémentaires, qui peuvent être couplés ensemble, chaque demi-moule ayant un demi-siège complémentaire du demi-siège de l'autre demi-moule pour former ledit premier siège (20) pour le logement du raccord (21) et le raccord (21) étant à son tour composé de deux moitiés complémentaires, qui peuvent être insérées dans les demi-sièges respectifs dudit premier siège (20), chaque moitié du raccord (21) étant à son tour munie d'un demi-siège destiné à former ledit second siège (14) pour le logement de la bague de goulot (16).
